(19) Europäisches Patentamt
European Patent Office
Office européen des brevets

(11) **EP 0 529 280 B1**

(12) **EUROPÄISCHE PATENTSCHRIFT**

(45) Veröffentlichungstag und Bekanntmachung des Hinweises auf die Patenterteilung:
**01.05.1996 Patentblatt 1996/18**

(51) Int. Cl.$^6$: **B60T 8/00**

(21) Anmeldenummer: **92112219.8**

(22) Anmeldetag: **17.07.1992**

(54) **Bremsdruckregelanlage für ein Fahrzeug**

Brake pressure control device for vehicle

Installation de réglage de la pression de freinage dans un véhicule automobile

(84) Benannte Vertragsstaaten:
**DE FR GB SE**

(30) Priorität: **24.08.1991 DE 4128087**

(43) Veröffentlichungstag der Anmeldung:
**03.03.1993 Patentblatt 1993/09**

(73) Patentinhaber: **ROBERT BOSCH GMBH**
**D-70442 Stuttgart (DE)**

(72) Erfinder:
• **Urban, Werner, Dipl.-Ing.**
**W-7257 Ditzingen 4 (DE)**
• **Binder, Jürgen, Dipl.-Ing. (FH)**
**W-7141 Schwieberdingen (DE)**
• **Willmann, Karl-Heinz, Dipl.-Ing.**
**W-7149 Freiberg/N. (DE)**

(56) Entgegenhaltungen:
| EP-A- 0 173 954 | EP-A- 0 392 164 |
| WO-A-89/11409 | WO-A-90/06251 |
| WO-A-91/05685 | DE-A- 3 833 211 |
| DE-A- 3 935 588 | GB-A- 2 135 413 |

**Beschreibung**

Stand der Technik

Die Bremskraftverteilung eines üblichen Fahrzeugs bezieht sich auf das Verhältnis zwischen Vorder- und Hinterachsbremskraft.

Dieses Verhältnis kann vom Fahrer nicht beeinflußt werden, da er mit einem Bremspedal beide Achsen abbremst, sodaß bei der Auslegung der Fahrzeugbremsen die Bremskraftverteilung ganz gezielt festgelegt werden muß.

Das Ziel einer idealen Bremskraftverteilung besteht zum einem darin, die Vorder- und Hinterachse gleich stark (bezogen auf die dynamischen Achslasten) abzubremsen, zum anderen darin, bei Kurvenbremsung die Verteilung so zu wählen, daß ein neutrales Fahrverhalten erreicht wird. Hierbei ist das Ziel des neutralen Fahrverhaltens dem Ziel der gleich großen Abbremsung übergeordnet.

Die gleich große Abbremsung (bezogen auf die dynamischen Achslasten) vorn und hinten kann bei Geradeausfahrt erreicht werden. Bei Kurvenfahrt (vor allem im Kurvengrenzbereich) muß zugunsten des Fahrverhaltens die Abbremsung der Hinterachse niedriger gewählt werden als an der Vorderachse.

Die Ursache liegt darin, daß trotz Achslastverlagerung die Zentrifugalkraft im Fahrzeugschwerpunkt wirkt, sodaß die Hinterachse eine höhere Seitenführungskraft bezogen auf die dynamische Achslast übertragen muß als die Vorderachse. Diese höhere Seitenführungskraft wird durch eine geringere Abbremsung erreicht.

Die ideale Bremskraftverteilung zwischen vorn und hinten hängt von folgenden Faktoren ab:

- statische Gewichtsverteilung und Schwerpunktslage (beim jeweiligen Beladungszustand)
- Fahrzeuglängsverzögerung
- Fahrzeugquerbeschleunigung
- Motorschleppmoment
- Steigung/Gefälle

Bei der konventionellen Bremsenabstimmung ist die Bremskraftverteilung unabhängig von diesen Faktoren: sie besteht aus einem festen Verhältnis zwischen vorn und hinten und wird dadurch realisiert, daß vorn und hinten derselbe Hydraulikdruck auf unterschiedlich große Bremsen wirkt.

Die Bremskraftverteilung wird entsprechend den gesetzlichen Vorschriften so gewählt, daß möglichst die Hinterachse nicht vor der Vorderachse zum Blockieren kommt. Diese Forderung ist darin begründet, daß bei zu stark gebremster Hinterachse das Fahrzeug bei Kurvenbremsung instabil werden kann, d.h. es kann zum Schleudern führen.

Nachteile der konventionellen Bremskraftverteilungen sind:

- schlechter Bremsweg, solange die Vorderräder nicht blockieren bzw. nicht in ABS-Regelung sind (vor allem bei beladenem Fahrzeug)
- hohe Beanspruchung der Vorderradbremsen (Belagverschleiß, Platzbedarf von großen Bremsen)
- eingeschränkte Lenkbarkeit durch hohe Abbremsung der Vorderräder
- instabiles Kurvenbremsverhalten, das bei der Wirkung von folgenden Faktoren möglich ist:
- Motorschleppmoment
- Gefällefahrt
- hohe Verzögerung (oberhalb des Schnittpunktes der idealen mit der konventionellen Verteilung)
- Bremskraftverteilung ausgelegt für hohe Hinterachsabbremsung (die vom Gesetzgeber geforderte Verteilung bei Geradeausfahrt kann trotzdem erfüllt sein!)
- Toleranzen im Reibwert Bremsbelag/Bremsscheibe
- Veränderungen in der Bremsanlage (heiße Vorderradbremse, sprich Fading)

Ist bei einem Fahrzeug die ideale Bremskraftverteilung stark abhängig von der Fahrzeuglängsverzögerung, wird normalerweise ein Hinterachsdruckbegrenzer oder -minderer eingesetzt.

Ist bei einem Fahrzeug die ideale Bremskraftverteilung zusätzlich noch stark vom Beladungszustand abhängig, wird üblicherweise ein lastabhängiger Hinterachsdruckminderer oder -begrenzer verwendet.

Diese Begrenzer, bzw. Minderer sind für manche Fahrzeuge sicherlich notwendig, sie verschlechtern aber prinzipiell die Stabilität bei Kurvenbremsung (im Vergleich zur konventionellen Festabstimmung, also zur <u>nicht</u> abgeknickten Geraden).

Ein weiteres Problem besteht darin, daß die Druckminderer und -begrenzer ihre Funktion durch einen Fehler verlieren können, ohne daß dieser Fehler vom Fahrer bemerkt werden kann (auch im Service wird die Funktion nicht überprüft).

Gemäß einem älteren Vorschlag (Patentanmeldung P 4012388.3) wird der Hinterachsdruck so geregelt, daß das langsamste Hinterrad geringfügig langsamer läuft als das schnellste Vorderrad. Bei Geradeausfahrt ist damit eine hohe Hinterachsabbremsung gewährleistet. Bei Kurvenfahrt wird infolge der Kreiskinematik und der Radlastverlagerung (links - rechts) die Hinterachse mit dieser Regelung geringer abgebremst als die Vorderachse. Hierbei werden Radgeschwindigkeitssensoren und Drucksensoren für den Druck an der Hinter- bzw. Vorderachse benötigt.

Aus der WO-A90/06251 wird unter Verwendung von Lenkwinkelsensor, Absolutgeschwindigkeitsgeber und Giergeschwindigkeitsgeber die Schräglaufwinkel der Vorder- und Hinterachsen ermittelt. Die Schlupfwerte der einzelnen Räder werden dann im Sinne einer größeren Fahrzeugbeherrschbarkeit variiert, wobei der Schräglaufwinkel an der Hinterachse etwas kleiner als der Schräglaufwinkel der Vorderachse ist.

Vorteile der Erfindung

Gegenüber der Lösung des älteren Vorschlags wird durch die Erfindung erreicht, daß keine unterbremste Hinterachse bei Kurvenbremsung (enge Kurve unterhalb Kurvengrenzgeschwindigkeit) infolge der Kreisgeometrie auftritt, daß Reifentoleranzen keine Auswirkungen haben und daß der Sollwert des Stabilitätsreglers nicht gesteuert vorgegeben, sondern im Sinne eines neutralen Fahrverhaltens durch die Vorderräder bestimmt wird.

Gemäß der Erfindung werden die vorhandenen Druckinformationen und die entsprechenden Radreaktionen zur Ableitung wichtiger Zustandsgrößen wie Radkräfte ($F\_br$, $F\_nor$) bzw. Bremsschlüpfe $\lambda$ herangezogen. Somit ist mit der erfindungsgemäßen Lösung eine geschlossene Lösung zur Regelung auf gleiche Schräglaufwinkel an Vorder- und Hinterachse und somit auf neutrales Fahrzeugverhalten gegeben; dies gilt für jede Fahrsituation, also auch für enge Kurven.

Neutrales Bremsverhalten ist durch etwa gleichen Schräglaufwinkel an Vorder- und Hinterachse charakterisiert. Somit ist der Schräglauf eine ideale Regelgröße.

Mit der vorhandenen Sensorik (Radgeschwindigkeiten und Drucksignale) läßt sich diese Größe nun nicht explizit ermitteln. Da jedoch bei der Stabilitätsregelung durch elektrische Bremskraftverteilung nicht auf Absolutwerte geregelt wird, sondern "lediglich" gleicher Schräglauf an Vorder- und Hinterachse angestrebt wird, genügt es eine geeignete Zustandsgröße zu finden, die einerseits vom Schräglaufwinkel abhängt und andererseits mit der zur Verfügung stehenden Sensorik ermittelt werden kann.

Die Steigung der Kraftschlußbeiwert/Schlupf-Kurve im linearen Bereich ist nun ein Maß für den Schräglaufwinkel und wird deshalb als Regelgröße für die Stabilitätsregelung verwendet.

In den erfindungsgemäßen Verfahren werden die zur Ermittlung der Steigung m erforderlichen Größen $F\_Br$, $F\_N$ und $\lambda$ aus den vorhandenen Raddrücken und Radgeschwindigkeiten $V_{Ri}$ wie folgt abgeschätzt:

1. Aus dem Vorderachsdruck pva, dem Hinterachsdruck pha und Bremskennwerten werden die Bremskräfte $F\_Br$ ermittelt:

Vorderräder: $\qquad F_{Br,vl}=F_{Br,vr}=C^*_{VA} \cdot pva \cdot A_{K,VA} \cdot r_{Br,VA}/r_{dyn,vorn} \cdot \eta_{VA}$

und für die Hinterräder: $\quad F_{Br,hl}=F_{Br,hr}=C^*_{HA} \cdot pha \cdot A_{K,HA} \cdot r_{Br,HA}/r_{dyn,hint} \cdot \eta_{HA}$

dabei ist:

$C^*$ : innere Übersetzung der Bremse (Verhältnis von Umfangskraft zu Spannkraft). Für Scheibenbremsen gilt:
$\qquad\qquad C^* = 2\mu_{Br}$
$\qquad\qquad\qquad \mu_{Br}$ = Belagreibwert
$A_K$ : Kolbenfläche des Radbremszylinders
$r_{Br}$ : wirksamer Reibradius
$r_{dyn}$: dynamischer Reifenhalbmesser
$\eta$ : Wirkungsgrad

2. Aus $v\_R$, pva, $F\_Br$ und FZ-Masse erhält man die FZ-Verzögerung $a\_1$:

Zunächst wird mittels eines Linienfilters die Verzögerung des schnellsten Vorderrades (nicht angetriebenes Rad) ermittelt; dabei wird über n Stützpunkte der Radgeschwindigkeit eine optimale Gerade (im Sinne einer Minimierung der Abstandsquadrate zwischen Geschwindigkeitswerten und Geradepunkten) gelegt und deren Steigung $V_R$ bestimmt.

Aus dieser Radverzögerung wird dann die Verzögerung des frei rollenden Rades wie folgt abgeschätzt

$$a\_1 = \dot{V}_R / (1-\lambda_R)$$

Da im betrachteten Teilbremsbereich (=linearer Ast der $\mu$-$\lambda$-Kurve) der Radschlupf $\lambda_R$ in guter Näherung direkt proportional dem anliegenden Raddruck ist (unabhängig von $\mu l$), wird die Verzögerung des frei rollenden Vorderrades wie folgt abgeschätzt:

$$a\_1 = \dot{V}_R / (1-c^*pva),$$

wobei die Konstante c einmalig für eine Standardsituation bestimmt wird ($\rightarrow$ Initialisierungswert für Regelung) und während der Regelung in der Anpassungsphase für die Referenzgeschwindigkeit ($\rightarrow$ siehe Punkt 3.) entsprechend der Fahrsituation korrigiert wird.

Um die ermittelten Referenzverzögerungen physikalisch sinnvoll abzugrenzen, werden mittels des Impulssatzes aus den errechneten Bremskräften für die größtmögliche und kleinstmögliche FZ-Masse Grenzwerte für die Referenzverzögerung errechnet:

$$a\_1_{min} = -1/m_{FZ,max} \sum_{i=1}^{4} F_{Br}(i) - \varepsilon$$

$$a\_1_{max} = -1/m_{FZ,min} \sum_{i=1}^{4} F_{Br}(i) - \varepsilon$$

mit $\varepsilon$: Korrekturwert wegen Sicherheit (z.B. Bremsen am Berg)

3. Aus $a\_1$, $v\_Rad$, pva erhält man die Referenzgeschwindigkeit $v\_ref$ für linke und rechte FZ-Seite:

Im Gegensatz zur Referenzverzögerung, welche allgemein für alle Radgeschwindigkeiten gilt, wird für die beiden FZ-Seiten (links/rechts) jeweils eine eigene Referenzgeschwindigkeit ermittelt.

Die folgenden Ausführungen zur Ermittlung der Referenzgeschwindigkeit beschränken sich auf eine FZ-Seite; die Referenz für die andere FZ-Seite ergibt sich entsprechend.

Grundsätzlich werden bei der Bestimmung der Referenzgeschwindigkeit 2 Phasen unterschieden:

- Extrapolationsphase
- Anpassungsphase

wobei die Extrapolationsphase eine bestimmte Zeit durchlaufen wird und danach durch eine kurze Anpassungsphase (1 Zyklus) unterbrochen wird, in der die Referenz in Steigung und Absolutwert korrigiert wird.

Extrapolationsphase

Die vergangene Referenzgeschwindigkeit wird mit der zuvor ermittelten Steigung $a_1$ extrapoliert und somit ein neuer aktueller Referenzwert festgelegt.

Anpassungsphase

In der Anpassungsphase werden folgende 2 Größen korrigiert:

a) Bremsschlupf/-druck-Proportionalitätsfaktor
b) Absolutniveau der Referenz

zu a):

Es wird überprüft, wie die extrapolierte Referenzgeschwindigkeit bzgl. den Radgeschwindigkeiten der entsprechenden Seite liegt.

Da die Geschwindigkeit des frei rollenden Rades über den anliegenden Bremsschlupf mit der Radgeschwindigkeit im Zusammenhang steht, ($v\_ref = V_{R,vorn}/(1-\lambda_{BR})$ erwarteter Referenzwert) kann überprüft werden, ob richtig oder aber zu steil bzw. zu flach extrapoliert worden ist; entsprechend wird dann eine Korrektur des Proportionalitätsfaktors vorgenommen:

zu flache Extrapolation:    -> $C_{neu} = C_{alt} + c\_eps$
zu steile Extrapolation:    -> $C_{neu} = C_{alt} - c\_eps$ .

Bei der Korrektur des Proportionalitätsfaktors c werden beide Referenzen gegenseitig gestützt: es ist diejenige FZ-Seite maßgebend für eine Korrektur von c, deren extrapolierte Referenz die kleinere Abweichung vom erwarteten Referenzwert hat.

zu b):

Die Anpassung der Referenzgeschwindigkeit bzgl. Absolutniveau geschieht in der Weise, daß diese in der Anpassungsphase auf den erwarteten Referenzgeschwindigkeitswert

$$v\_ref_{erw} = V_{Rad,vorn} / (1-c^*pva)$$

gesetzt wird.

Auch hier stützen sich die Referenzen gegenseitig:

Es gilt die Regel, daß grundsätzlich diejenige Referenz zuverlässiger ist, welche nicht so weit nach unten bzw. weiter nach oben zu korrigieren ist. Dementsprechend wird diese Referenz auf den erwarteten Wert $v\_ref_{er}$ gesetzt.

Die Referenzkorrektur der anderen FZ-Seite wird über einen $PT_1$-Filter durch die Korrektur der zuverlässigeren Referenz gestützt. Dadurch wird verhindert, daß ein stark in Schlupf gehendes Vorderrad die entsprechende Referenz mitzieht.

Es wird immer dann eine Anpassungsphase durchgeführt, wenn:

- eine feste Extrapolationszeit verstrichen ist, oder
- durch eine der beiden Referenzen ein vom Vordruck abhängiger Minimalschlupf bzgl. des entsprechenden Vorderrads unterschritten wird.

4. Aus den Radgeschwindigkeiten und der Spurweite läßt sich der Kurvenradius kr abschätzen:

Zur näherungsweisen Bestimmung von Fahrzeuggeschwindigkeit $V_{FZ}$ und Kurvenradius kr werden die Radgeschwindigkeiten derjenigen Achse herangezogen, welche die kleinere Radgeschwindigkeitsdifferenz aufweist:

$V_l$ :     linke Radgeschwindigkeit der maßgebenden Achse
$V_r$ :     rechte Radgeschwindigkeit der maßgebenden Achse

Aus diesen beiden Geschwindigkeiten werden die zu bestimmenden Größen $V_{FZ}$ und kr wie folgt abgeschätzt:

$$V_{FZ} = 0.5 * (V_l + V_r);$$

$$kr = Spurweite * V_{FZ}$$

$$/(| V_{links} - V_{rechts} |).$$

5. Aus kr, $V_{FZ}$ (links/rechts) erhält man die Querbeschleunigung a_q:

$$a\_q = F^2_{FZ}/kr$$

6. Aus a_1, a_q ergeben sich die dynamischen Radaufstandskräfte FN:

$$FN_{vorn,außen} = 0.5^* (G_{VA} + dyn_1 + dyn_q)$$

$$FN_{vorn,innen} = 0.5^* (G_{VA} + dyn_1 - d_{ynq})$$

$$FN_{hinten,außen} = 0.5^* (G_{HA} - dyn_1 + dyn_q)$$

$$FN_{hinten,innen} = 0.5^* (G_{HA} - dyn_1 - dyn_q)$$

mit:

$dyn_1 = G * a_{1,bez} * \chi_1$  : dynamischer Anteil aufgrund FZ-Längsverzögerung
$dyn_q = G * a_{q,bez} * \chi_q$  : dynamischer Anteil aufgrund FZ-Querverzögerung

$G$ : Gewichtskraft des FZ

$G_{VA}$ : statischer Vorderachslastenteil

$G_{HA}$ : statischer Hinterachslastenteil

$a_{l,bez}$ : bezogene FZ-Längsverzögerung ($a_l/g$)

$a_{q,bez}$ : bezogene FZ-Querverzögerung ($a_q/g$)

$\chi_l$ : radstandsbezogene Schwerpunktshöhe (Schwerpunktshöhe/Achsabstand)

$\chi_q$ : spurweitenbezogene Schwerpunktshöhe (Schwerpunktshöhe/Achsabstand)

$FN_{außen/innen}$ bedeutet die Aufstandskraft des Kurvenäußeren bzw. Kurveninneren Rads.

7. Aus v_Rad, v_ref erhält man den Bremsschlupf $\lambda$:

$$\lambda = 1 - (V_R/V_{ref})$$

8. Aus F_Br, F_N und $\lambda$ ergibt sich der Schlupfkurvensteigung m:

Für den betrachteten Teilbremsbereich zeigen die $\mu$-$\lambda$-Kurven lineares Verhalten. Die Referenzsteigungen können deshalb aus den ermittelten Brems- und Radaufstandskräften sowie aus den abgeschätzten Bremsschlüpfen wie folgt abgeschätzt werden:

$$\tan = \mu/\lambda = F_{Br}/ (F_N{}^*\lambda)$$

$$\text{mit } \mu = \frac{F_{Br}}{F_N}$$

Mit m_soll = m_vorn = mv und m_ist = m_hinten = mh ist damit eine geschlossene Lösung zur Regelung auf gleiche Schräglaufwinkel uns somit auf neutrales FZ-Verhalten möglich.

Oben wurde ein Verfahren zur Ermittlung der Steigung der Kraftschlußbeiwert/Schlupf-Kurve angegeben, basierend auf einer Auswerung von Absolutgrößen $F_{Br}$, $F_N$ und $\lambda$.

Diese Steigung kann jedoch auch durch Verwendung von Änderungsgrößen in folgender Form ermittelt werden:

$$\tan = \frac{\dfrac{\theta}{rdyn} \cdot \ddot{V}_R + k_{Br} \cdot \dot{P}_{Rad}}{r_{dyn} F_N \cdot \dot{\lambda}}$$

mit

$\theta$: Radträgheitsmoment

$r_{dyn}$: dynamischer Reifenhalbmesser

$\ddot{V}_R$: Radbeschleunigungsänderung

$k_{Br}$: Bremsenkennwert: $2 \cdot \mu_{Br} \cdot r_{Br} \cdot A_k \cdot \eta$ mit $\mu_{Br}$ = Belagreibwert $r_{Br}$, $\eta$

$\dot{P}_{Rad}$: Raddruckänderung

$\dot{\lambda}$: Schlupfänderung

Diese Art der Auswertung bringt insbesondere den großen Vorteil mit sich, daß die beschriebene Regelung unabhängig von eventuellen Reifentoleranzen arbeitet.

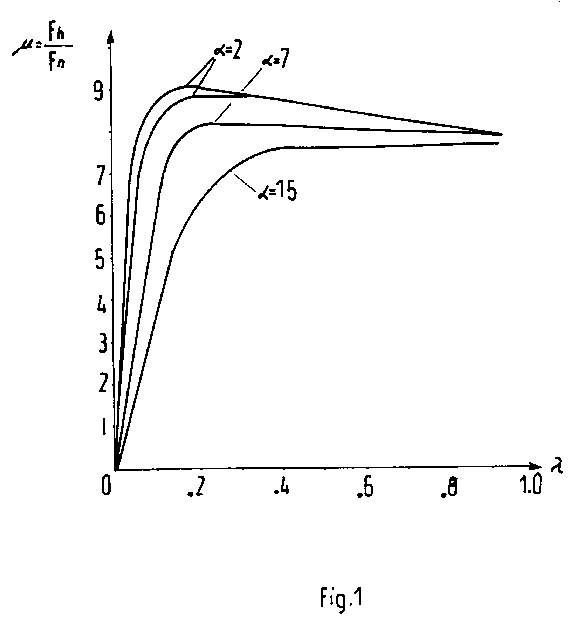

Die Fig. 1 der Zeichnung zeigt, daß die $\mu$-Schlupfkurven vom Schräglaufwinkel $\alpha$ abhängig sind.

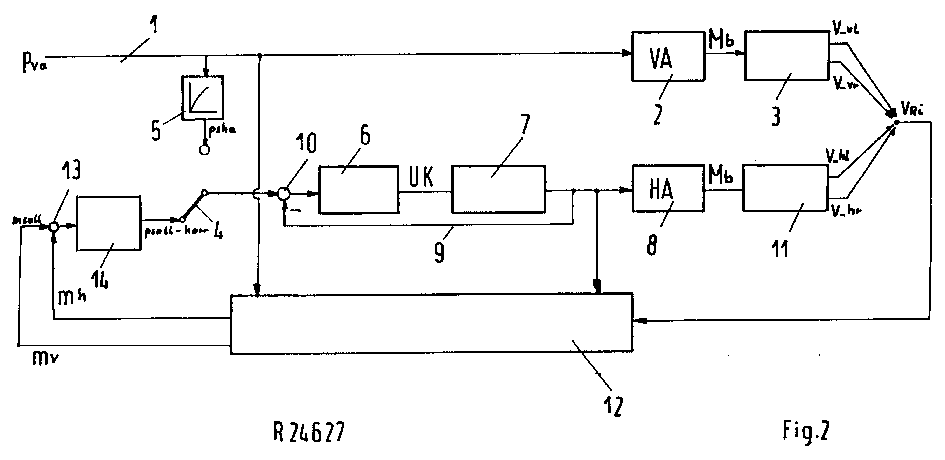

Anhand der Fig. 2 wird an einem als Blockschaltbild dargestellten Regelprinzip ein Ausführungsbeispiel der Erfindung erläutert.

In der Bremsleitung 1 wird vom Fahrer der Vorderachsbremsdruck pva vorgegeben, der auf die Vorderachsbremsen 2 einwirkt. Das dabei erzeugte Bremsmoment $M_b$ wirkt auf den Block 3, der die Vorderräder, die Reifen und die Straße beinhalten soll. Als Folge ergeben sich Änderungen in den Geschwindigkeiten v_vl und v_vr der Vorderräder.

In der gezeichneten Stellung des Schalters 4 wird die Regelung der Achsdrücke auf gleiche Schräglaufwinkel vorgenommen. Einem Block 12 werden die Achsdrücke pva und pha und die Radgeschwindigkeiten $V_{Ri}$ zugeführt. In diesem Block 12 werden gemäß den oben aufgeführten Beziehungen 1. - 8. die augenblicklichen Steigungen mv und mh der gültigen $\mu$-Schlupfkurven an den beiden Achsen ermittelt. Die Steigung mv der Vorderachse geht als Sollwert zu einem Vergleicher 13, dem auch die Steigung mh zugeführt wird.

Die Differenz der m-Werte wird in einem Stabilitätsregler 14, der im wesentlichen ein Proportional-Differential-Ubertragungs-Verhalten aufweist, in ein Sollwertsignal psoll-korr für den Hinterachsbremsdruck umgesetzt, auf den ein Druckregler 6 einregelt. Dieser erzeugt ein Steuersignal UK für ein Magnetventil 7, an das eine nicht gezeigte Druckquelle angeschlossen ist. Am Ausgang des Ventils 7 und in den Hinterachsbremsen 8 wird aufgrund der Rückführung eines diesem Bremsdruck entsprechenden Signals auf einer Leitung 9 zu einem Vergleicher 10, ein Hinterachsbremsdruck eingeregelt, der dem vorgegebenen Sollbremsdruck entspricht. Auch hier beeinflußt das erzeugte Bremsmoment über einen Block 11 (Hinterräder, Reifen, Straße) die Geschwindigkeiten vhl, vhr der Hinterräder.

Aus dem Vorderachsbremsdruck pva wird entsprechend der idealen Bremskraftverteilung für voll beladenes Fahrzeug 5 ein oberer Grenzwert psha für den Hinterachsbremsdruck ermittelt.

Bei Überschreitung dieses Grenzwertes durch das im Stabilitätsregler ermittelten Sollwertsignal psoll-korr schaltet Schalter 4 in die nicht gezeichnete Stellung um.

Das in Fig. 2 dargestellte Regelprinzip gilt für eine Fahrzeugseite. Dem Druckregler gemäß der Erfindung kann ein ABS oder/und eine ASR nebengeordnet sein.

## Patentansprüche

1. Bremsdruckregelanlage für ein Fahrzeug, bei der der Bremsdruck an der Vorderachse durch den Fahrer vorgegeben wird und bei dem der Hinterachsbremsdruck eingestellt wird, wobei der Schräglaufwinkel der Hinterachse in etwa dem der Vorderachse entspricht, dadurch gekennzeichnet, daß Mittel (12) zur Ermittlung der Steigung der $\mu$-Schlupf-Kurven an den Achsen und Mittel (14) zur Einstellung des Hinterachsbremsdrucks vorgesehen sind, die durch Einstellung des Hinterachsbremsdrucks eine in etwa gleiche Steigung an beiden Achsen herbeiführen.

2. Bremsdruckregelanlage nach Anspruch 1, dadurch gekennzeichnet, daß zur Ermittlung der Steigungen die Radgeschwindigkeiten und die Drücke an den Bremsen der beiden Achsen ermittelt werden.

3. Bremsdruckregelanlage nach Anspruch 1, dadurch gekennzeichnet, daß der Hinterachsdruck auf einen oberen Grenzwert, welcher sich aus dem Vorderachsbremsdruck entsprechend der idealen Bremskraftverteilung für voll beladenes Fahrzeug ergibt, begrenzt wird.

4. Bremsdruckregelanlage nach Anspruch 1, dadurch gekennzeichnet, daß die Steigung der $\mu$-Schlupf-Kurve im wesentlichen aus den Schlupfänderungswerten, den Druckänderungswerten, den Radbeschleunigungsänderungswerten und den Radaufstandskräften ermittelt wird.

## Claims

1. Brake pressure control system for a vehicle, in which the brake pressure at the front axle is specified by the driver and in which the rear axle brake pressure is adjusted, the skew running angle of the rear axle being approximately equal to that of the front axle, characterized in that means for determining the slope of the $\mu$-slip curves at the axles and means (14) for adjusting the rear axle brake pressure are provided, which means, by adjusting the rear axle brake pressure, bring about an approximately equal slope at both axles.

2. Brake pressure control system according to Claim 1, characterised in that the wheel speeds and the pressures at the brakes of both axles are determined in order to determine the slopes.

3. Brake pressure control system according to Claim 1, characterized in that the rear axle pressure is limited to an upper limiting value which follows from the front axle brake pressure corresponding to the ideal braking force distribution for a fully-loaded vehicle.

4. Brake pressure control system according to Claim 1, characterized in that the slope of the $\mu$-slip curve is substantially determined from the slip change values, the pressure change values, the wheel acceleration change values and the wheel tread forces.

## Revendications

1. Installation de réglage de la pression de freinage dans un véhicule automobile, dans le cas de laquelle la pression de freinage sur l'essieu avant est prédéfinie par le conducteur et dans le cas de laquelle on règle la pression de freinage sur l'essieu arrière, l'angle d'inclinaison de marche de l'axe pivot de l'essieu arrière correspondant à peu près à celle de l'essieu avant, installation caractérisée en ce que l'on prévoit des moyens (12) pour déterminer la pente des courbes de glissement $\mu$ sur les essieux et des moyens (14) pour régler la pression de freinage sur l'essieu arrière, moyens qui provoquent par le réglage de la pression de freinage sur l'essieu arrière une pente à peu près égale sur les deux essieux.

2. Installation de réglage de la pression de freinage selon la revendication 1, caractérisée en ce que pour déterminer les pentes on détermine les vitesses des roues et les pressions sur les freins des deux essieux.

3. Installation de réglage de la pression de freinage selon la revendication 1, caractérisée en ce qu'on limite la pression sur l'essieu arrière à une valeur limite supérieure, qui résulte de la pression de freinage sur l'essieu avant qui correspond à la répartition idéale des forces de freinage pour un véhicule complètement chargé.

4. Installation de réglage de la pression de freinage selon la revendication 1, caractérisée en ce que l'on détermine la pente de la courbe de glissement $\mu$ essentiellement à partir des valeurs de variation du glissement, des valeurs de variation de la pression, des valeurs de variation de l'accélération des roues et des forces de contact au sol des roues.

Fig.1

Fig.2

R 24627